(19) Europäisches Patentamt / European Patent Office / Office européen des brevets

(11) **EP 1 694 442 B1**

(12) **EUROPEAN PATENT SPECIFICATION**

(45) Date of publication and mention of the grant of the patent:
**11.07.2007 Bulletin 2007/28**

(21) Application number: **03768399.2**

(22) Date of filing: **01.12.2003**

(51) Int Cl.:
*B01J 37/00* (2006.01)     *B01J 35/10* (2006.01)

(86) International application number:
**PCT/NO2003/000402**

(87) International publication number:
**WO 2005/053845 (16.06.2005 Gazette 2005/24)**

(54) **METHOD FOR HEAT TREATMENT OF A METAL OXIDE CATALYST FOR REMOVAL OF ORGANIC MATERIAL TO MAKE A POROUS CATALYST**

VERFAHREN ZUR WÄRMEBEHANDLUNG EINES METALLOXIDKATALYSATORS ZUR ENTFERNUNG VON ORGANISCHEM MATERIAL ZUR HERSTELLUNG EINES PORÖSEN KATALSATORS

PROCEDE DE TRAITEMENT THERMIQUE D'UN CATALYSEUR A OXYDE DE METAL EN VUE DE L'ELIMINATION DE MATIERE ORGANIQUE AFIN D'OBTENIR UN CATALYSEUR POREUX

(84) Designated Contracting States:
**AT BE BG CH CY CZ DE DK EE ES FI FR GB GR HU IE IT LI LU MC NL PT RO SE SI SK TR**

(43) Date of publication of application:
**30.08.2006 Bulletin 2006/35**

(73) Proprietor: **YARA International ASA**
**0202 Oslo (NO)**

(72) Inventor: **WALLER, David**
**N-3931 Porsgrunn (NO)**

(74) Representative: **Wallace, Sheila Jane et al**
**Lloyd Wise**
**Commonwealth House**
**1-19 New Oxford Street**
**London WC1A 1LW (GB)**

(56) References cited:
**GB-A- 1 415 089      GB-A- 1 442 566**
**US-A- 3 856 708      US-A- 3 928 238**
**US-A- 3 993 592      US-A- 4 169 883**

**Description**

When designing real industrial catalysts, in the form of pellets or extrudates, an important parameter is the porosity with the catalyst. This is because, for fast and moderately fast reactions, the observed rate of the reaction may be dependant on not just the reaction between the reactant and the catalyst surface, but also by the rate at which reactants are transported into the bulk of the catalyst and products are transported to the exterior of the catalyst. To achieve control over the gas transport properties, the pore volume and pore size within the catalyst should be optimised for the particular application.

When pellets are pressed, or formed by extrusion, there will be holes or pores remaining in the structure after sintering, at intermediate temperatures. The pores are simply the spaces created between particles with a random-packing. The size of the pores is governed by the size of the particles that are packed together and the sintering temperature. Unfortunately, one cannot simply rely on this process to obtain the desired porosity. This is because the pores that are generated are small (typically with a diameter which is less than half the size of the particles that are packed). The small pores are not stable and after sintering, the pore volume fraction is only 40 to 50%. Secondly, small pores may be eliminated over time when subjected to high temperatures, so the porosity is further reduced. Thirdly, the small pore size may be comparable to the mean free path length of the gas molecules so that gas transport occurs through Knudsen diffusion, thus reducing the transport properties of the reactant. To produce a catalyst with the desired pore volume and pore size, a pore-forming material is introduced prior to for example spray drying, which is removed during the thermal treatment. The space occupied by the pore former, becomes the pore. A wide range of materials may be used as pore formers. Organic material such as starches, cellulose, and polymers are commonly used. However, inorganic materials such as ammonium nitrate may also be incorporated. The key points of the pore former are that it should be insoluble in the liquid processing media; it should create pores of the correct size; it should not leave undesirable residue after removal; it should be a low cost and readily available material.

During ammonia oxidation in the course of nitric acid production, nitrous oxide $N_2O$, which is not desired, is produced alongside the desired nitrogen monoxide NO. $N_2O$ makes a considerable contribution to decomposing ozone in the stratosphere and to the greenhouse effect. After reduction of nitrous oxide emissions from the adipic acid industry, nitric acid production is the largest source of industrial nitrous oxide emissions. For environmental protection reasons there is therefore an urgent need for technical solutions for reducing nitrous oxide emissions during nitric acid production. One promising method of removing $N_2O$ from industrial waste gases is the decomposition of $N_2O$ into the elements nitrogen and oxygen, with the aid of a suitable catalyst. Such a catalyst is described for example in Norwegian patent No.313 494. This catalyst comprises oxides of cobalt, iron and aluminium.

Porosity is also an important factor in the performance of a $N_2O$ catalyst. As the reaction is moderately fast, high porosity aids the transport of $N_2O$ into the interior of the catalyst pellet and improves that rate at which the decomposition products are transported from the interior to the exterior of the pellet. A second benefit of high porosity is that in principle, it will reduce NO losses, as for a given installed volume; there is a lower mass of catalyst installed. Because NO losses are quite low, it is difficult to quantify, but the principle has a sound basis.

To create porosity in an $N_2O$ decomposition catalyst, cornstarch meets the necessary requirements of a pore former. Typically, cornstarch grains have a mean diameter of 10 to 15 microns. After incorporation into the catalyst, compaction and sintering, a pore diameter of 2 microns is normally achieved. Other starches may be used to create larger or smaller pore sizes (potato and rice starch, respectively).

The use of organic materials to create porosity has a long history in ceramic production. Ceramic filters and ceramic insulation are two well-known areas. The removal of the organic material from these systems, although not trivial, is relatively easy because the inorganic matrix is typically alumina or an alumino-silicate. The inorganic matrix is thus relatively inert towards the decomposition of the organic pore former. Therefore, slow heating in an air furnace is normally sufficient to remove the organics. An example of the removal of starch from an inert ceramic matrix is by Lyckfeldt and Ferreira , "Processing of Porous Ceramics by'Starch Consolidation' ", J. Eur. Ceram. Soc., 18, 131-140 (1998).

However, when producing a material, which is a good oxidation catalyst, the starch decomposes in air very rapidly in the presence of the catalyst,. The result of the rapid decomposition is an uncontrolled temperature rise and the generation of a large quantity of gas with the pellets. This results in very weak pellets. Once a defect is produced in the pellets, thermal treatment will not repair the damage.

One way of overcoming this problem is a thermal treatment based on controlling the exothermic decomposition of the starch by controlling the oxygen concentration. This is described in International patent application PCT/NO03/00197. The catalyst pellets are held in baskets made from perforated heat resistant metal. Nitrogen gas containing a small quantity of air passes through the baskets. The nitrogen is pre-heated using a conventional high temperature duct heater. The temperature of the catalyst pellets is monitored and controlled by a combination of control of the temperature of the incoming gas and the oxygen content of the gas. The advantages of this method are; firstly, the size of the exotherm due to the oxidation of the starch is limited to a maximum of 130°C above the incoming gas temperature; the flow of gas removes the decomposition products from the catalyst and also removes heat from the catalyst beds. The disadvantages of the method are that a large quantity of nitrogen is consumed (5 to 20 tons of nitrogen per ton of catalyst, depending on the starch content of the catalyst and the size of the exotherm that may be tolerated) and a purpose built furnace is required.

The object of the invention is to obtain strong, porous catalyst materials. Another object is to obtain a controlled thermal treatment of the material. It is beneficial if the thermal treatment is carried out in a conventional, low cost furnace.

These and other objects of the invention are obtained with the method as described below. The invention is further characterised by the patent claims.

The invention will be further explained with reference to the accompanying Figures 1- 5, wherein

Figure 1      shows sintering of catalyst in air and $O_2/N_2$
Figure 2      shows thermal treatment of catalyst in $O_2/N_2$ and $CO_2/H_2O$ atmosphere
Figure 3A      shows holes drilled through tray and lid
Figure 3B      shows open porosity through tray and lid
Figure 4      shows temperature profiles in upper trays
Figure 5      shows temperature profiles in lower catalyst layers

The invention thus concerns a method for heat treatment of a metal oxide catalyst for removal of organic material to make a porous catalyst as defined in claim 1. The catalyst particles are thus heated in an atmosphere in which the rate of oxygen transport to the catalyst is controlled through diffusion in order to reduce and control the exothermic decomposition of an organic pore former. The catalyst is contained within a sealed tray, container or sagger, preferably constructed from a refractory ceramic material. The preferred materials are alumina, alumino-silicates, magnesium alumino-silicates or another heat resistant ceramic or metal.

The transport of oxygen to the catalyst is controlled by limiting oxygen access to the interior of the tray, container or sagger via holes or openings in the lid, base and walls. The transport of oxygen could also be controlled by diffusion of oxygen through interconnected pores in the lid, wall and base of the tray, container or sagger. The porosity is preferably greater than 20%.

The catalyst particles are placed in a closed porous container, heated at a controlled rate to a temperature, preferably less than 500°C, in which the pore-forming phase decomposes thermally. The temperature is maintained for a sufficient period of time so that the required quantity of oxygen is able to diffuse into the tray, container or sagger, to decompose the organic pore forming phase in the catalyst. The temperature of the furnace is raised to a sufficiently high temperature such that sintering of the catalyst takes place, after the pore forming phase has been removed by oxidation. The temperature of the furnace is maintained for sufficient time so that the catalyst has the required mechanical strength, and physiochemical properties. Any organics diffusing out from the tray, container or sagger could be decomposed by contact with an oxidation catalyst coated onto the surface of the tray, container or sagger.

The invention also concerns the use of a tray, container or sagger constructed from a refractory material with holes or openings or interconnected pores in lid, base and walls of the tray, container or sagger for oxygen transport as defined in claim 15. The porosity is preferably greater than 20%. It is preferred that the outer surface has a coating of an oxidation catalyst.

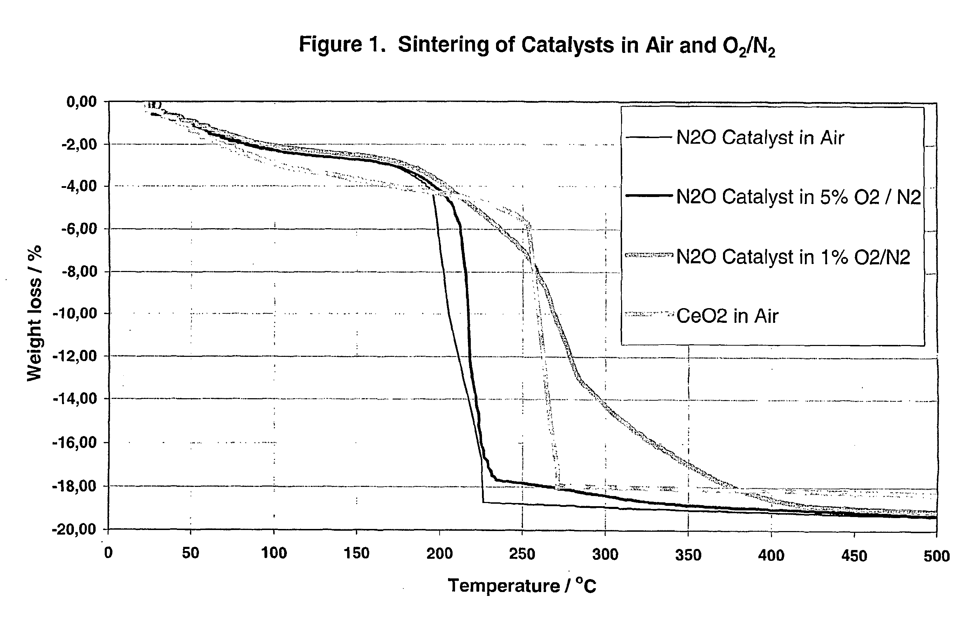

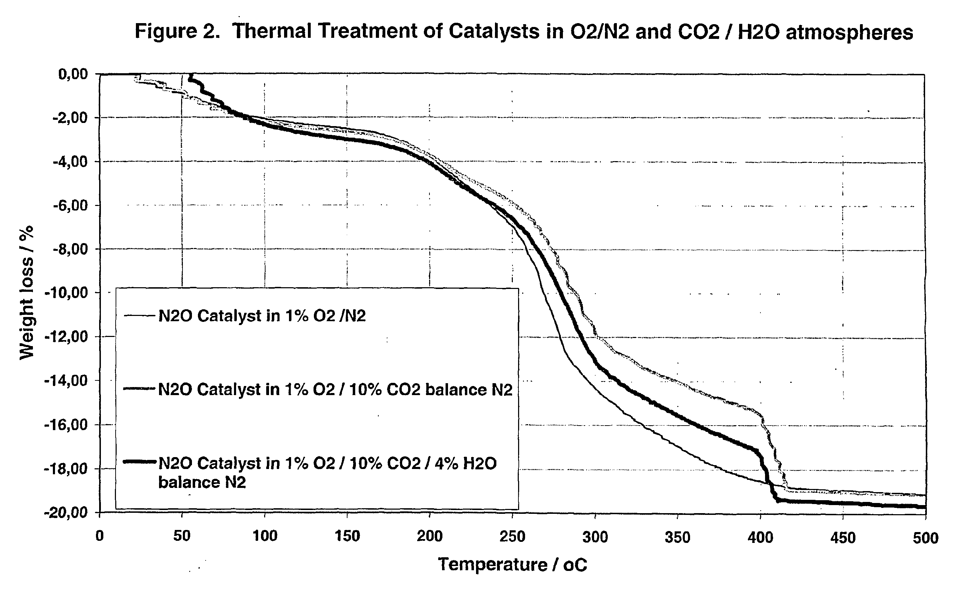

An example of the removal of starch from an oxidation catalyst is illustrated in Figure 1. A catalyst pellet is heated at 1°C/min in atmospheres containing different concentrations of oxygen, and the weight loss as a function of temperature is monitored. It is observed that in air, the weight loss occurs very rapidly, and in terms of the catalyst pellet integrity, catastrophically, when heated in air. The reason for this is due to the exothermic nature of the starch oxidation, as the starch decomposes, the pellet is heated. This leads to an increase in the temperature of the pellet and a subsequent increase in the rate at which the remaining starch decomposes. This gives rise to the thermal run-away. Similarly, heating in 5% oxygen / $N_2$, leads to an extremely rapid decomposition of the starch. By reducing the oxygen partial concentration to 1%, the rate of the starch oxidation is also reduced and the heat generated by the decomposition of the starch may be transported away from the pellet. It is also seen, that the presence of a small quantity of catalytically active phase may reduce the temperature for the onset of the starch decomposition, as the weight loss in air for the catalyst is significantly lower than for the pure support oxide. It is observed from Figure 2, that the rate of decomposition of starch is further reduced if the atmosphere contains $CO_2$ or $CO_2$ and water vapour.

The new method of thermal treatment is based on a method used when sintering the starch-containing pellets in laboratory furnaces. In the laboratory preparations, small quantities of pellets were sintered in dense alumina trays, which were partly sealed using an alumina sheet. A small gap was left to allow the slow transport of oxygen into the tray and to allow the decomposition products to diffuse out.

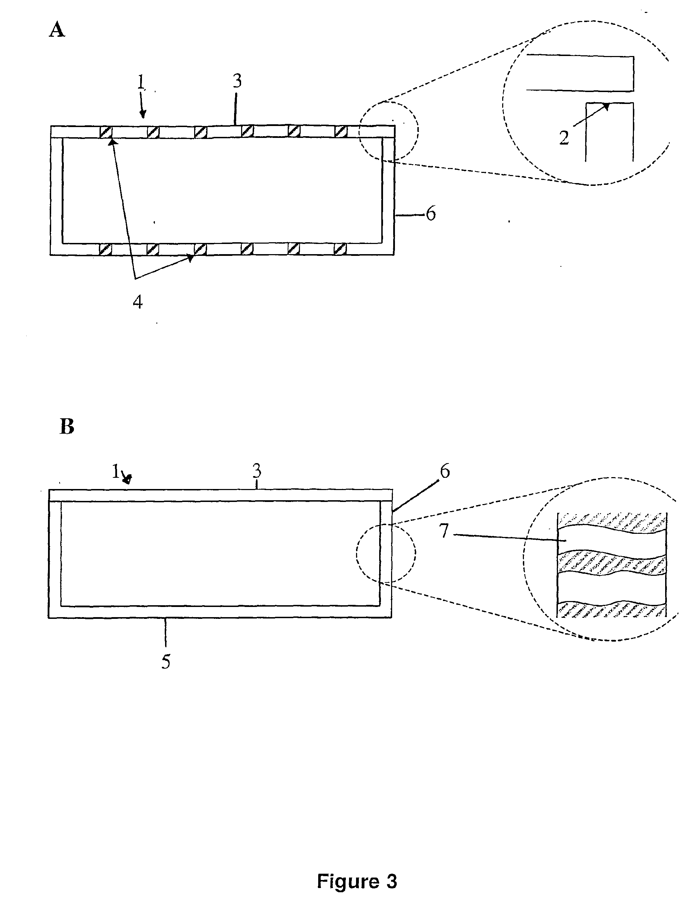

It is proposed that this method may also be used in full-scale production. The pellets are placed into ceramic trays, known as "saggers" in the ceramics industry. These are illustrated in Figure 3. The trays 1 containing the pellets are placed into a standard air furnace, heated either by gas burners or electrical elements. The top surface 2 of the tray and a lower surface of the lid 3 are ground flat to produce a leak free joint. Two main concepts are envisaged.

Concept A. That oxygen, from the air atmosphere of the furnace, diffuses into the tray 1 during the sintering through holes 4 machined into the lid 3 and / or base 5. The size and number of holes determines the rate at which oxygen diffuses into the trays.

The flux of oxygen diffusing into the closed trays through the holes is given by:

$$\text{Flux (unit volume oxygen/unit area of hole/unit time} = D_{O2/N2} \, [C_o\text{-}C_i]/L \qquad \text{Eq. 1}$$

Where $D_{O2/N2}$ is the binary diffusion coefficient of oxygen and nitrogen, $C_o$ and $C_i$ are the concentrations of oxygen outside and inside the trays, respectively and L is the thickness of the tray and lid.

Concept B. The second concept is that the tray has a degree of porosity and the oxygen diffuses into the tray through the walls 6, base 4 and lid 3. The porosity of the tray and lid material is designed to produce the correct gas transport properties. It could be connected porosity 7 from exterior to interior of tray or lid.

The effective diffusion coefficient of a gas through a porous medium may be represented by:

$$D_{eff} = D_{O2/N2}\varepsilon\tau \qquad \text{Eq.2}$$

Where $D_{eff}$ is the effective diffusion coefficient, $D_{O2/N2}$ is the binary diffusion coefficient of the oxygen and nitrogen, $\varepsilon$ is the void fraction in the porous ceramic and $\tau$ is the tortuosity factor for gas transport through the porous ceramic.

The flux of oxygen diffusing through the ceramic into the tray is given by:

$$\text{Flux (unit volume/unit area/unit time)} = D_{eff} \, [C_{out} - C_{in}] / L \qquad \text{Eq.3}$$

This concept will give the most uniform product because the hot spots in the catalyst bed should be avoided. The exothermic temperature rise, caused by the oxidation of the organic pore former, is further reduced as the tray, sagger or container will develop an atmosphere rich in $CO_2$ and water vapour, when the starch oxidises. It is observed in Figure 2, that this reduces the rate of oxidation of the organic phase and hence reduces the size of the temperature rise during the oxidation of the organic phases.

**Examples**

A number of experiments have been carried out in a $1m^3$ gas fired industrial kiln (furnace) using trays with different combinations of holes, giving different "hole" areas. The extent of the reaction was monitored, by measuring the temperature at the top and bottom of the pellet bed by the use of thermocouples. The trays (20 x 20 x 7cm) were filled with 2 kg of catalyst pellets and placed within the furnace. The catalyst pellets consisted of cobalt and aluminium salts, supported on cerium oxide, and contained 15 weight % corn-starch, based on the cerium oxide. The furnace was heated in several stages. The first stages were to remove the corn-starch pore former, and the final stage, at 980°C was to sinter the pellets. The total time of the thermal treatment was 50 hours. The temperature program is shown in Table 1.

**Table 1.** Temperature program for furnace

| Stage | Heating rate °/min | Temperature / °C | Dwell / hours |
|-------|--------------------|------------------|---------------|
| 1 | 2 | 150 | 0 |
| 2 | 0,5 | 200 | 19 |
| 3 | 0.5 | 300 | 6 |
| 4 | 0.5 | 350 | 0 |
| 5 | 2 | 400 | 2 |

(continued)

| Stage | Heating rate °/min | Temperature / °C | Dwell / hours |
|---|---|---|---|
| 6 | 2 | 980 | 6 |
| 7 | Rapid cool (8hours) | Room temperature | |

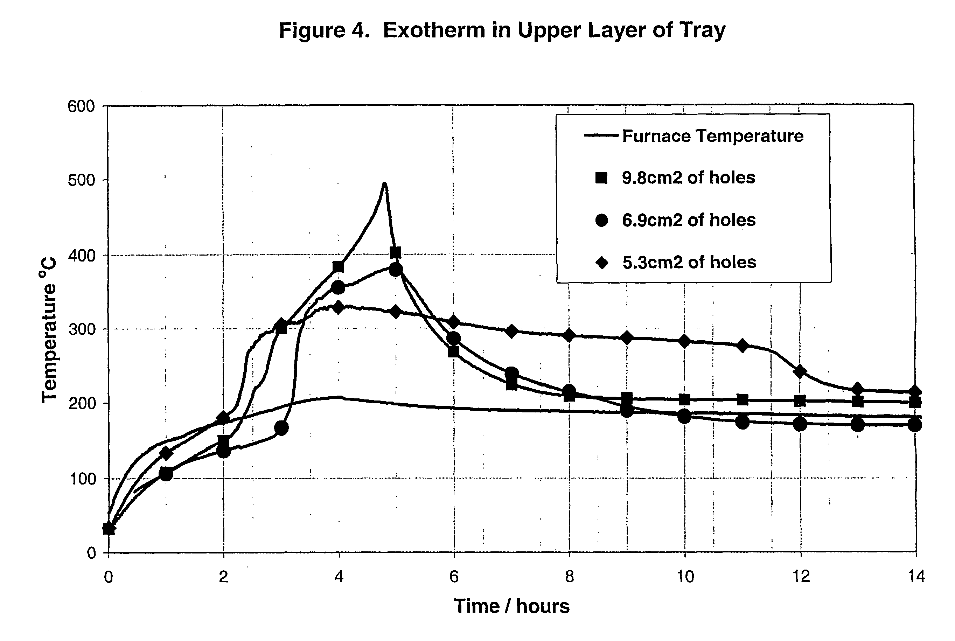

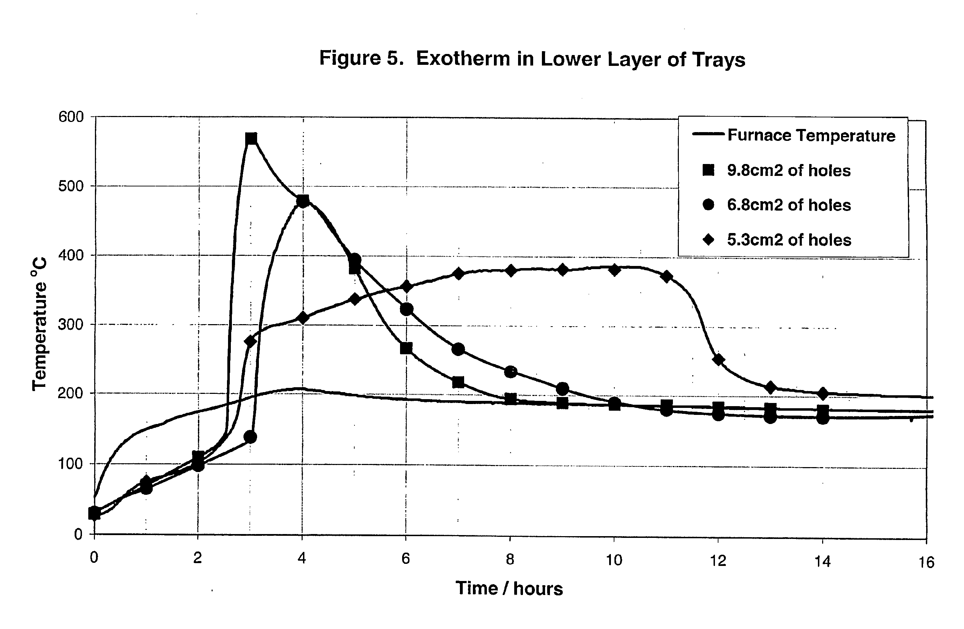

The exotherms for the upper and lower thermocouples in trays, with different hole areas, are shown in Figures 4 and 5. It could be observed that for the upper layer of pellets, the exotherm occurred when the temperature exceeded 160 to 190°C. In the case of the lower layers of pellets, the exotherm occurred when the temperature exceeded 140°C.

For the upper layer of pellets, it could be observed that with a hole area of 9,8 cm$^2$, the temperature increases rapidly from 173 to 300°C at 2.8°/min, and from 300 to 490°C at 1.7°/min. The temperature then fell rapidly to the furnace temperature. By contrast, the tray with a hole area of 5.3 cm$^2$, showed an exotherm of 70°C from 198 to 268°C, at a rate of 5.3°/ min, followed by an increase to 330°C over a period of 3 hours. After 11 hours the temperature returned to the furnace temperature. Similarly, for the lower layer of pellets, the tray with the 9.8 cm$^2$ hole area underwent an exotherm from 137 to 568°C, at a rate of 13.5°/min, before falling to the furnace temperature. In the case of the tray with 5.3 cm$^2$ holes, the exotherm was very much reduced.

The trays containing 2 kg of pellets, contain 300g of starch. Assuming that starch consists of -CH$_2$O- units, for complete combustion, one O$_2$ per CH$_2$O unit is required:

$$CH_2O + O2 \rightarrow CO_2 + H_2O$$

Therefore, 300g of starch require 320g or 10 moles of oxygen (224 litres). For the tray with 5,3 cm$^2$ of holes, a flux of oxygen equivalent to 18.6 litres per hour should diffuse into the tray (based on equation number 1.). Therefore, it would require 12 hours to combust all the starch. From Figures 4 and 5, it is seen that for the tray with 5,3 cm$^2$ of holes, the exotherm did indeed end after approximately 12 hours.

With the tray system containing 5.3 cm$^2$ of holes, the exotherm observed in the upper and lower layers are comparable to those observed when using the method based on air diluted in nitrogen. The strength, porosity and the carbon of the pellets, prepared using the new method are the same, or indeed superior, to those produced using the nitrogen furnace (See Table 2)

**Table 2. Physical properties of pellets**

| Sample | | Carbon wt.% | Surface Area m$^2$.g$^{-1}$ | Porosity % | Radial crush strength / N |
|---|---|---|---|---|---|
| Nitrogen method | | 0.02 | 4.5 | 68 | 2.5 |
| 9.8cm$^2$ of holes | Top layer | 0.018 | 5.1 | 67 | 2.8 |
| | Lower layer | 0.017 | 4.7 | 67 | 2.9 |
| 6.8cm$^2$ of holes | Top layer | 0.018 | 5.5 | 67 | 3.4 |
| | Lower layer | 0.019 | 3.9 | 67 | 3.2 |
| 5.3cm$^2$ of holes | Top Layer | 0.023 | 4.8 | 68 | 3.7 |
| | Lower Layer | 0.022 | 4.9 | 70 | 3.4 |

To summarise the advantages of the new method:

1. The sintering may be carried out in a standard gas fired furnace, without the use of expensive nitrogen
2. The complete thermal treatment time for each batch may be as short as 50 hours

The physical properties of the catalyst appear to be comparable or even superior to those produced using the nitrogen method.

The decomposition of the starch inevitably leads to the production of some volatile organic compounds. If a nitrogen furnace is used in a full-scale production process, the exhaust gas should ideally be treated (combusted). However, to achieve this either oxygen must be added to the exhaust gas so that oxidation of the organics will take place, rather than pyrolysis. On a practical level, the best option would be a trap to concentrate the organics, prior to a "batch-wise" combustion. However, most industrial gas fired furnaces, designed for the ceramics industry are equipped with an after-burner to consume organics. However, if the *Concept B* trays, are used in which oxygen is transported into the tray via diffusion through the tray wall, we may carry out the thermal treatment in an electrical furnace, by depositing a coating of an oxidation catalyst onto the surface of the tray. As organics diffuse out of the tray, they contact the oxidation catalyst and are decomposed to $CO_2$ and $H_2O$. Suitable oxidation catalysts include highly dispersed platinum, such as 1 % Pt on $Al_2O_3$ and cobalt and manganese oxides, other transition metal oxides and mixed oxide.

Even if this method is exemplified with specific reference to heat treatment of $N_2O$ catalysts, it is generally applicable to any metal oxide catalyst.

**Claims**

1.   A method for heat treatment of a metal oxide catalyst for removal of organic material to make a porous catalyst, wherein the catalyst particles are contained within a sealed tray, container or sagger having holes or openings or interconnected pores in its lid, base and walls and are heated in an atmosphere in which the rate of oxygen transport to the catalyst is controlled by diffusion of oxygen through the holes or openings or interconnected pores in order to reduce and control the exothermic decomposition of an organic pore former.

2.   A method according to claim 1, wherein the sealed tray, container or sagger is constructed from a refractory ceramic material.

3.   A method according to claim 1 or claim 2, wherein the sealed tray, container or sagger is constructed from alumina, alumino-silicates, magnesium alumino-silicates or another heat resistant ceramic or metal.

4.   A method according to any one of the preceding claims, wherein the transport of oxygen to the catalyst is controlled by limiting oxygen access to the interior of the tray, container or sagger via holes or openings in the lid, base and walls of the tray, container or sagger.

5.   A method according to any one of the preceding claims, wherein the rate of oxygen transport to the catalyst, within the tray, container or sagger, is determined by the size and number of holes or openings in the lid, wall and base of the tray, container or sagger
according to:

$$\text{rate of oxygen transport (unit volume/unit time)} = D_{O2/N2}\,[C_O - C_i]\,n\,A\,/\,L$$

where $D_{O2/N2}$ is the binary diffusion coefficients of oxygen and nitrogen, $C_o$ and $C_i$ are the concentrations of oxygen outside and inside the container, n is the number of holes, A is the area of the holes and L is the thickness of the lid, wall and base of the tray, container or sagger.

6.   A method according to any one of claims 1 to 3, where the transport of oxygen to the tray, container or sagger occurs and is controlled by diffusion of oxygen through interconnected pores in the lid, wall and base of the tray, container or sagger.

7.   A method according to any one of claims 1 to 3 or 6, wherein the transport of oxygen into the tray, container or sagger, occurs via diffusion through the lid, wall and base of the tray, container or sagger
according to:

$$\text{flux of oxygen into tray (unit volume oxygen/unit area tray/unit time} = D_{eff} = [C_O - C_i]/L$$

where $D_{eff}$ is the effective diffusion coefficient of oxygen through the porous tray, $C_o$ and $C_i$ are the concentrations of oxygen outside and inside of the tray and L is the thickness of the tray lid, wall and base, and $D_{eff}$ Is given by:

$$D_{eff} = D_{O2/N2}\,\varepsilon\tau$$

where $D_{O2/N2}$ is the binary diffusion coefficient of oxygen and nitrogen, $\varepsilon$ is the pore volume fraction of the tray and $\tau$ is the tortuosity factor.

8. A method according to any one of claims 1 to 3, 6 or 7, wherein the porosity of the tray, container or sagger and lid is sufficiently high such that there is connected porosity between the outer and inner surfaces, to allow the diffusion of oxygen from a furnace into the tray, container or sagger.

9. A method according to claim 8, wherein the porosity of the tray, container or sagger and lid is greater than 20%.

10. A method according to any one of the preceding claims, wherein any organics diffusing out from the tray, container or sagger are decomposed by contact with an oxidation catalyst coated onto the surface of the tray, container or sagger.

11. A method according to any one of the preceding claims, wherein the catalyst particles are placed in a closed porous container, heated at a controlled rate to a temperature, preferably less than 500°C, in which the pore forming phase decomposes thermally.

12. A method according to claim 11, wherein the temperature is maintained for a sufficient period of time so that the required quantity of oxygen is able to diffuse into the container, to decompose the organic pore forming phase in the catalyst.

13. A method according to any one of the preceding claims, wherein the catalyst particles are placed in a furnace and the temperature of the furnace is raised to a sufficiently high temperature such that sintering of the catalyst takes place, after the pore forming phase has been removed by oxidation.

14. A method according to claim 13, wherein the temperature of the furnace is maintained for sufficient time so that the catalyst has the required mechanical strength, and physiochemical properties.

15. Use of a sealed tray, container or sagger (1), constructed from a refractory ceramic material and having holes or openings (4) or interconnected pores (7) in the lid (3), base (5) and walls (6) of the tray, container or sagger for controlled oxygen transport in a process according to any one of claims 1 to 14.

16. Use of a tray, container or sagger according to claim 15, wherein the porosity is greater than 20%.

17. Use of a tray, container or sagger according to claim 15 or claim 16, wherein the outer surface has a coating of an oxidation catalyst.

**Patentansprüche**

1. Verfahren zur Wärmebehandlung eines Metalloxidkatalysators zum Entfernen organischen Materials, um einen porösen Katalysator herzustellen, wobei die Katalysatorteilchen in einer versiegelten Schale, Brennkapsel oder einem versiegelten Behälter mit Löchern oder Öffnungen oder miteinander verbundenen Poren in Deckel, Boden und Wänden enthalten sind und unter eine Atmosphäre erwärmt werden, unter der die Geschwindigkeit des Sauerstofftransports zu dem Katalysator durch die Diffusion des Sauerstoffs durch Löcher oder Öffnungen oder miteinander verbundenen Poren gesteuert wird, um die exotherme Zersetzung eines organischen Porenbildners zu vermindern und zu steuern.

2. Verfahren gemäß Anspruch 1, wobei die versiegelte Schale, Brennkapsel oder der versiegelte Behälter aus einem feuerbeständigen keramischen Material aufgebaut ist.

3. Verfahren gemäß Anspruch 1 oder 2, wobei die versiegelte Schale, Brennkapsel oder der versiegelte Behälter aus Aluminiumoxid, Alumosilikaten, Magnesiumalumosilikaten oder einem anderen wärmebeständigen keramischen Material oder Metall aufgebaut ist.

4. Verfahren gemäß einem der vorstehenden Ansprüche, wobei der Sauerstofftransport zu dem Katalysator durch Begrenzung des Sauerstoffzutritts zum Inneren der Schale, Brennkapsel oder des Behälters durch Löcher oder Öffnungen in Deckel, Boden und Wänden der Schale, Brennkapsel oder des Behälters gesteuert wird.

5. Verfahren gemäß einem der vorstehenden Ansprüche, wobei die Geschwindigkeit des Sauerstofftransport zu dem Katalysator in der Schale, Brennkapsel oder dem Behälter durch die Größe und Anzahl der Löcher oder Öffnungen in Deckel, Boden und Wänden der Schale, Brennkapsel oder des Behälters gemäß:

$$\text{Geschwindigkeit des Sauerstofftransports}$$
$$(\text{Volumeneinheit/Zeiteinheit}) = D_{O2/N2}[C_O-C_i)\ n\ A\ /\ L$$

bestimmt wird, wobei $D_{O2/N2}$ der binäre Diffusionskoeffizient von Sauerstoff und Stickstoff ist, $C_o$ und $C_i$ die Sauerstoffkonzentrationen außerhalb und innerhalb des Behälters sind, n die Anzahl der Löcher ist, A die Oberfläche der Löcher ist und L die Dicke des Deckels, der Wand oder des Boden der Schale, Brennkapsel oder des Behälters ist.

6. Verfahren gemäß einem der Ansprüche 1 bis 3, wobei der Sauerstofftransport in die Schale, Brennkapsel oder den Behälter durch Diffusion des Sauerstoffs durch miteinander verbundene Poren in Deckel, Wand und Boden der Schale, Brennkapsel oder des Behälters erfolgt und gesteuert wird.

7. Verfahren gemäß einem der Ansprüche 1 bis 3 oder 6, wobei der Sauerstofftransport in die Schale, Brennkapsel oder den Behälter durch Diffusion durch Deckel, Wand und Boden der Schale, Brennkapsel oder des Behälters gemäß:

$$\text{Sauerstofffluß in die Schale (Volumeneinheit}$$
$$\text{Sauerstoff/Flächeneinheit Schale/Zeiteinheit}) = D_{eff} =$$
$$[C_O-C_i)/L$$

erfolgt, wobei $D_{eff}$ der effektive Diffusionskoeffizient von Sauerstoff durch die poröse Schale ist, $C_o$ und $C_i$ die Sauerstoffkonzentrationen außerhalb und innerhalb der Schale sind und L die Dicke von Deckel, Wand und Boden der Schale ist und $D_{eff}$ durch:

$$D_{eff} = D_{O2/N2}\ \varepsilon\tau$$

gegeben ist,
wobei $D_{O2/N2}$ der binäre Diffusionskoeffizient von Sauerstoff und Dickstoff ist, E der Porenvolumenanteil der Schale ist und $\tau$ der Gewundenheitsfaktor ist.

8. Verfahren gemäß einem der Ansprüche 1 bis 3, 6 oder 7, wobei die Porosität der Schale, Brennkapsel oder des Behälters und Deckels ausreichend hoch ist, so daß zusammenhängende Porosität zwischen den äußeren und inneren Oberflächen besteht, um die Diffusion von Sauerstoff aus einem Ofen in die Schale, Brennkapsel oder den Behälter zu ermöglichen.

9. Verfahren gemäß Anspruch 8, wobei die Porosität der Schale, Brennkapsel oder des Behälters und Deckels größer als 20 % ist.

10. Verfahren gemäß einem der vorstehenden Ansprüche, wobei auf der Schale, Brennkapsel oder dem Behälter diffundierende organische Stoffe durch Kontakt mit einem auf die Oberfläche der Schale, Brennkapsel oder des Behälters beschichteten Oxidationskatalysators zersetzt werden.

11. Verfahren gemäß einem der vorstehenden Ansprüche, wobei die Katalysatorteilchen in einen verschlossenen porösen Behälter gegeben werden, mit einer kontrollierten Geschwindigkeit auf eine Temperatur, vorzugsweise weniger als 500°C, erwärmt werden, bei der sich die porenbildende Phase thermisch zersetzt.

**12.** Verfahren gemäß Anspruch 11, wobei die Temperatur eine ausreichende Zeit lang aufrechterhalten wird, so daß die erforderliche Sauerstoffmenge in den Behälter diffundieren kann, um die organische porenbildende Phase in dem Katalysator zu zersetzen.

**13.** Verfahren gemäß einem der vorstehenden Ansprüche, wobei die Katalysatorteilchen in einen Ofen gegeben werden und die Temperatur des Ofens auf eine ausreichend hohe Temperatur erhöht wird, so daß Sintern des Katalysators stattfindet, nachdem die porenbildende Phase durch Oxidation entfernt worden ist.

**14.** Verfahren gemäß Anspruch 13, wobei die Temperatur des Ofens eine ausreichende Zeit lang aufrechterhalten wird, so daß der Katalysator die erforderliche mechanische Stärke und physiochemischen Eigenschaften aufweist.

**15.** Verwendung einer versiegelten Schale, Brennkapsel oder eines versiegelten Behälters (1), der/die aus einem feuerbeständigen keramischen Material aufgebaut ist und Löcher oder Öffnungen (4) oder miteinander verbundene Poren (7) in Deckel (3), Boden (5) und Wänden (6) der Schale, Brennkapsel oder des Behälters für den kontrollierten Sauerstofftransport aufweist, in einem Verfahren gemäß einem der Ansprüche 1 bis 14.

**16.** Verwendung einer Schale, Brennkapsel oder eines Behälters gemäß Anspruch 15, wobei die Porosität größer als 20 % ist.

**17.** Verwendung einer Schale, Brennkapsel oder eines Behälters gemäß Anspruch 15 oder 16, wobei die äußere Oberfläche eine Beschichtung mit einem Oxidationskatalysator aufweist.

**Revendications**

**1.** Procédé de traitement thermique d'un catalyseur à oxyde de métal en vue de l'élimination de matière organique afin d'obtenir un catalyseur poreux, dans lequel des grains du catalyseur sont contenus à l'intérieur d'un bac, d'un conteneur ou d'une nacelle fermé hermétiquement et ayant des orifices, des ouvertures ou des pores interconnectés dans son couvercle, sa base et ses parois, et sont chauffés dans une atmosphère dans laquelle la vitesse de transport de l'oxygène vers le catalyseur est commandée par la diffusion de l'oxygène à travers les orifices, les ouvertures ou les pores interconnectés afin de réduire et de contrôler la décomposition exothermique d'un gabarit de pore organique.

**2.** Procédé selon la revendication 1, dans lequel le bac, le conteneur ou la nacelle fermé hermétiquement est fabriqué à partir d'un matériau céramique réfractaire.

**3.** Procédé selon la revendication 1 ou 2, dans lequel le bac, le conteneur ou la nacelle fermé hermétiquement est fabriqué à partir d'alumine, d'aluminosilicates, d'aluminosilicates de magnésium ou d'une autre céramique ou d'un autre métal résistant à la chaleur.

**4.** Procédé selon l'une quelconque des revendications précédentes, dans lequel le transport de l'oxygène vers le catalyseur est commandé en limitant l'accès de l'oxygène à l'intérieur du bac, du conteneur ou de la nacelle via des orifices ou ouvertures dans le couvercle, la base et les parois du bac, du conteneur ou de la nacelle.

**5.** Procédé selon l'une quelconque des revendications précédentes, dans lequel la vitesse de transport de l'oxygène vers le catalyseur, à l'intérieur du bac, du conteneur ou de la nacelle, est déterminée par la taille et le nombre d'orifices ou ouvertures dans le couvercle, la paroi et la base du bac, du conteneur ou de la nacelle conformément à :

$$\text{vitesse de transport de l'oxygène (unité de volume/unité de temps)} = D_{O2/N2}[C_O - C_i]\, n\, A/L$$

où $D_{O2/N2}$ correspond aux coefficients de diffusion binaire de l'oxygène et de l'azote, $C_o$ et $C_i$ sont les concentrations d'oxygène à l'extérieur et à l'intérieur du conteneur, n est le nombre d'orifices, A est la surface des orifices et L est l'épaisseur du couvercle, de la paroi et de la base du bac, du conteneur ou de la nacelle.

**6.** Procédé selon l'une quelconque des revendications 1 à 3, dans lequel le transport de l'oxygène vers le bac, le conteneur ou la nacelle a lieu et est commandé par la diffusion d'oxygène à travers les pores interconnectés dans le couvercle, la paroi et la base du bac, du conteneur ou de la nacelle.

**7.** Procédé selon l'une quelconque des revendications 1 à 3 ou 6, dans lequel le transport de l'oxygène dans le bac, le conteneur ou la nacelle, a lieu via la diffusion à travers le couvercle, la paroi et la base du bac, du conteneur ou de la nacelle conformément à :

$$\text{flux d'oxygène dans le bac (unité de volume d'oxygène/unité de surface de bac/unité de temps)} = D_{eff} = [C_o - C_i]/L$$

où $D_{eff}$ est le coefficient de diffusion effective d'oxygène à travers le bac poreux, $C_O$ et $C_i$ sont les concentrations d'oxygène à l'extérieur et à l'intérieur du bac, et L est l'épaisseur du couvercle, de la paroi et de la base du bac, et $D_{eff}$ est donné par la formule suivante :

$$D_{eff} = D_{O2/N2}\varepsilon\tau$$

où $D_{O2/N2}$ est le coefficient de diffusion binaire de l'oxygène et de l'azote, $\varepsilon$ est la fraction de volume des pores du bac et $\tau$ est le facteur de tortuosité.

**8.** Procédé selon l'une quelconque des revendications 1 à 3, 6 ou 7, dans lequel la porosité du bac, du conteneur ou de la nacelle et du couvercle est suffisamment élevée, de telle sorte qu'il existe une porosité connectée entre les surfaces externes et internes, pour permettre la diffusion d'oxygène à partir d'un four dans le bac, le conteneur ou la nacelle.

**9.** Procédé selon la revendication 8, dans lequel la porosité du bac, du conteneur ou de la nacelle et du couvercle est supérieure à 20 %.

**10.** Procédé selon l'une quelconque des revendications précédentes, dans lequel tout organique diffusant en dehors du bac, du conteneur ou de la nacelle est décomposé lorsqu'il entre en contact avec un catalyseur d'oxydation enduit sur la surface du bac, du conteneur ou de la nacelle.

**11.** Procédé selon l'une quelconque des revendications précédentes, dans lequel des grains de catalyseur sont placés dans un conteneur poreux fermé, chauffés à une vitesse contrôlée, à une température de préférence inférieure à 500 °C, dans lequel la phase de formation des pores se décompose sous l'effet de la chaleur.

**12.** Procédé selon la revendication 11, dans lequel la température est maintenue pendant une période suffisante, de telle sorte que la quantité requise d'oxygène est capable de se diffuser dans le conteneur, pour décomposer la phase de formation des pores organiques dans le catalyseur.

**13.** Procédé selon l'une quelconque des revendications précédentes, dans lequel les grains du catalyseur sont placés dans le four, et la température du four est augmentée à une température suffisamment élevée de telle sorte que le frittage du catalyseur a lieu, après avoir éliminé par oxydation la phase de formation des pores.

**14.** Procédé selon la revendication 13, dans lequel la température du four est maintenue pendant une durée suffisante, de telle sorte que le catalyseur a la résistance mécanique et les propriétés physicochimiques requises.

**15.** Utilisation d'un bac, d'un conteneur ou d'une nacelle fermé hermétiquement (1), fabriqué à partir d'un matériau céramique réfractaire ayant des orifices ou ouvertures (4) ou des pores interconnectés (7) dans le couvercle (3), la base (5) et les parois (6) du bac, du conteneur ou de la nacelle pour un transport d'oxygène contrôlé dans un processus selon l'une quelconque des revendications 1 à 14.

**16.** Utilisation d'un bac, d'un conteneur ou d'une nacelle selon la revendication 15, dans lequel la porosité est supérieure à 20 %.

**17.** Utilisation d'un bac, d'un conteneur ou d'une nacelle selon la revendication 15 ou 16, dans lequel la surface externe est enduite d'un catalyseur d'oxydation.

## Figure 1. Sintering of Catalysts in Air and $O_2/N_2$

EP 1 694 442 B1

Figure 2. Thermal Treatment of Catalysts in O2/N2 and CO2 / H2O atmospheres

EP 1 694 442 B1

A

B

**Figure 3**

# Figure 4.  Exotherm in Upper Layer of Tray

Figure 4.  Exotherm in Upper Layer of Tray

EP 1 694 442 B1

Figure 5. Exotherm in Lower Layer of Trays

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- NO 313494

- WO 0300197 A

**Non-patent literature cited in the description**

- **LYCKFELDT ; FERREIRA.** Processing of Porous Ceramics by'Starch Consolidation. *J. Eur. Ceram. Soc.,* 1998, vol. 18, 131-140